Europäisches Patentamt

European Patent Office

Office européen des brevets

(11) Veröffentlichungsnummer: **0 284 141 B1**

(12) **EUROPÄISCHE PATENTSCHRIFT**

(19)

(45) Veröffentlichungstag der Patentschrift: **22.04.92**

(51) Int. Cl.⁵: **B21C 37/08**

(21) Anmeldenummer: **88200467.4**

(22) Anmeldetag: **11.03.88**

(54) Verfahren und Vorrichtung zur Herstellung von dünnwandigen Rohren.

(30) Priorität: **25.03.87 DE 3709784**

(43) Veröffentlichungstag der Anmeldung:
**28.09.88 Patentblatt 88/39**

(45) Bekanntmachung des Hinweises auf die
Patenterteilung:
**22.04.92 Patentblatt 92/17**

(84) Benannte Vertragsstaaten:
**AT BE CH DE FR GB IT LI LU NL**

(56) Entgegenhaltungen:
EP-A- 0 127 127     DE-A- 1 752 774
DE-C- 2 607 970     US-A- 2 817 364
US-A- 3 015 018     US-A- 3 230 336
US-A- 4 299 108

(73) Patentinhaber: **RHEINZINK GMBH**
**Bahnhofstrasse 90 Postfach 1452**
**W-4354 Datteln(DE)**

(72) Erfinder: **Dyllus, Frank Ulrich**
**Sternbusch 39**
**W-4716 Olfen(DE)**
Erfinder: **Nichtweiss, Bernd**
**Praunheimer Landstrasse 108**
**W-6000 Frankfurt am Main(DE)**

(74) Vertreter: **Rieger, Harald, Dr.**
**Reuterweg 14**
**W-6000 Frankfurt a.M.(DE)**

## Beschreibung

Die Erfindung betrifft ein Verfahren zur Herstellung von vergleichsweise dünnwandigen Rohren mit durch Widerstandsschweißen hergestellter Längsnaht, insbesondere von Regenfallrohren, mit einem Durchmesser von 50 bis 200 mm und einer Wanddicke von 0,50 bis 1,50 mm aus einem Band, vorzugsweise einem Endlosband, aus Zink oder Zinkknetlegierungen, vorzugsweise aus Zink-Kupfer-Titan-Legierungen, zu einem gerundeten, mit einem beidseitig der Symmetrieebene verlaufenden Längsschlitz versehenen Profil, wobei die den Längsschlitz begrenzenden Längsränder in einer vergleichsweise kurzen Zone auf Schweißtemperatur erwärmt, unter Bildung eines V-förmigen Spaltes im Schweißpunkt zusammengeführt und durch Stauchen stumpf miteinander verschweißt werden.

In der DE-PS 26 07 970 ist ein Verfahren und eine Vorrichtung zur Herstellung von aus NE-Metallen bestehenden dünnwandigen Rohren mit eingelegtem Lot beschrieben. Dabei werden aus Blechstreifen entsprechender Größe Profile gerundet, deren Längsränder sich im Bereich der durch Löten herzustellenden Längsnaht unter Bildung einer Fuge überlappen. Nach dem Einlegen eines Lötbandes in die Fuge werden die sich überlappenden Längsränder des gerundeten Profils aufeinandergedrückt, durch Wärmezufuhr erhitzt und die Längsnahtverbindung des Rohres gelötet. Gemäß DIN 18641 können solche Überlappungsnähte auch durch Schweißen hergestellt werden. Als nachteilig ist jedoch anzusehen, daß sowohl die herstellbare Rohrlänge als auch die maximal erreichbare Löt- bzw. Schweißgeschwindigkeit von 8 m/min begrenzt sind. Darüber hinaus wird durch die Überlappungsnähte die ästhetische Wirkung der Rohre nicht unerheblich beeinträchtigt.

In der US-A-2 817 364 ist ein Verfahren zur Herstellung von vergleichsweise dünnwandigen Rohren, vorzugsweise Aluminiumrohren, mit geschweißter Längsnaht durch Hochfrequenz-Induktions-Preßschweißen beschrieben. Bei dem Verfahren wird ein Metallband an seinen Längskanten angeschrägt, dann zu einem rohrförmigen Querschnitt verrundet, anschließend die Längskanten in einer kurzen Zone auf Schmelztemperatur erwärmt und unter Bildung eines V-förmigen Spaltes im Schweißpunkt zusammengeführt und stumpfgeschweißt.

Ziel der vorliegenden Erfindung ist, ausgehend von dem eingangs beschriebenen Verfahren, die kontinuierliche selbsttätige Fertigung von längsnahtgeschweißten Rohren jeder gewünschten Länge, die den im Bauwesen heute üblichen ästhetischen Anforderungen genügen.

Gelöst ist diese Aufgabe dadurch, daß die vor dem Walzprofilieren zur Herstellung ihrer Parallelität zerspanten Längsränder des Bandes unter Bildung des Längsschlitzes parallel gegenübergestellt und in einer Zone von 0,2 bis 1,5 mm Breite sowie 0,5 bis 2,5 mm Länge auf eine unterhalb der Schmelztemperatur liegende Schweißtemperatur erwärmt und im plastischen Zustand miteinander verschweißt werden.

Um eine einwandfreie Schweißnaht zu erhalten, ist es notwendig, die Stirnflächen der Längsränder des Bandes vor dem Walzprofilieren parallel zueinander verlaufend zu zerspanen, so daß sie sich bei gerundetem Profil im Stauch-Schweiß-Bereich ohne Schwierigkeiten parallel gegenüberstellen lassen. Durch die Zerspanung wird auch die Oxidhaut beseitigt. Diese Maßnahmen vermeiden unregelmäßiges Wärmeeinbringen, Energieverluste, einseitige Gratbildung, starke punktuelle Überhitzung mit Aufschmelzen des Bandwerkstoffs, Kantenversatz sowie ein Überlappen der Längsränder.

Bei Banddicken von 1 mm und größer ist es angebracht, die Stirnflächen der Längsränder des Bandes unter einem Winkel von größer 0 bis 10° zu zerspanen, da dann gewährleistet ist, daß die Stirnflächen der Längsränder im Stauch-Schweiß-Bereich parallel einander gegenüberstellbar sind.

Im Rahmen der vorzugsweisen Ausgestaltung des erfindungsgemäßen Verfahrens werden die Längsränder des gerundeten Profils in der vergleichsweise kurzen Zone auf wenigstens 350°C erwärmt.

Der Winkel des V-förmigen Längsspaltes, unter dem die Längsränder des vorgerundeten Profils im Schweißpunkt zusammengeführt werden, ist durch die Verformungseigenschaften des Bandes begrenzt. Die Längsränder werden vor dem Schweißen praktisch aus der Neigung in die horizontale Ebene gezwungen und stehen somit unter starker Zugbelastung, die jedoch den elastischen Bereich nicht überschreiten darf, um ein Ausknicken zu vermeiden. Es ist deshalb zweckmäßig, daß der V-förmige Längsspalt einen Winkel von 3 bis 10°, vorzugsweise 5 bis 7°, besitzt.

Zur Herstellung der Schweißnaht werden die in einer kurzen Zone auf höchstens Schmelztemperatur erwärmten Längsränder des gerundeten Profils im Schweißpunkt durch Stauchen zusammengedrückt und miteinander verschweißt, wobei der Stauchweg das 0,5- bis 3-fache der Dicke des Bandes beträgt. Bei einer Erwärmung der vergleichsweise kurzen Zone der Längsränder über den Schmelzpunkt des Bandwerkstoffs hinaus kann es zu einem Schmelzen in den Zonen und damit zur Ausbildung einer Schweißnaht kommen, deren Güte den gestellten mechanisch-technologischen Anforderungen nicht entspricht.

Zur Herstellung der Schweißnaht ist insbesondere das Hochfrequenz-Induktions-Preßschweißen geeignet.

Eine hohe Güte der Schweißnaht läßt sich dann erreichen, wenn die Hochfrequenzleistung in der Erwärmungszone 5 bis 150 KVA, vorzugsweise 5 bis 100 KVA, beträgt.

Zum Zwecke der Bearbeitung des Bandes nach dem erfindungsgemäßen Verfahren in einem Durchlauf sind in Linie aneinandergereiht eine Zerspanungseinrichtung zum Zwecke der parallelzerspanenden Bearbeitung der Längsränder des Bandes, mehrere horizontale Biegewalzenpaare, zwischen denen das Band zum gerundeten Profil mit einem beidseitig der Symmetrieebene verlaufenden Längsschlitz geformt wird, wenigstens ein horizontales Führungsrollenpaar, durch das die Längsränder des gerundeten Profils parallel gestellt werden und die mittlere Fase des Bandes während der Umformung in der Symmetrieebene bleibt, ein Spuleninduktor zum Zwecke der Erwärmung der Längsränder des gerundeten Profils in der Erwärmungszone, wenigstens ein vertikales Stauchdruckrollenpaar, mit dem die Längsränder des gerundeten Profils zum Schweißpunkt hin zusammengeführt und parallel gegenübergestellt und im plastischen Zustand durch stetigen Stauchdruck miteinander verbunden werden, und gegebenenfalls eine Trennvorrichtung zum Zwecke des Ablängens der Rohrabschnitte von einem hergestellten Rohrstrang.

Um das Auffedern des gerundeten Profils zu vermeiden, ist es zweckmäßig, einem jeden Biegewalzenpaar ein vertikales Seitenrollenpaar nachzuordnen.

Eine vorzugsweise Ausbildung der Oberrolle des die Parallelstellung der Längsränder des gerundeten Profils bewirkenden Führungsrollenpaars besteht darin, daß in der senkrecht zur Rollenachse stehenden Ebene im Rollengrund ein zylinderförmiger Ring angebracht ist, der in den Längsschlitz des gerundeten Profils eintaucht und gegen dessen Seitenflächen die Längsränder gedrückt werden.

Der beste Wirkungsgrad des Spuleninduktors und damit eine optimale Wärmeeinbringung in die Längsränder des gerundeten Profils im Bereich der Erwärmungszone ist dann erreichbar, wenn die Dicke des Ringspaltes zwischen dem Außendurchmesser des gerundeten Profils und dem Innendurchmesser des Spuleninduktors 0,5 bis 5 mm beträgt.

Falls erforderlich, kann im Inneren des gerundeten Profils ein mit dem Spuleninduktor zusammenwirkender Magnetkern angeordnet sein, um eine möglichst starke Konzentration des Hochfrequenzstroms in der Erwärmungszone der Längsränder des gerundeten Profils zu erzielen.

Im allgemeinen reicht die Anordnung eines vertikalen Stauchdruckrollenpaars für das Zusammenführen und Stauchen der Längsränder des gerundeten Profils im Schweißpunkt aus. Die Wirkung wird jedoch verbessert, wenn an die Stelle des vertikalen Stauchdruckrollenpaars drei im Winkel von 120° oder vier im Winkel von 90° diagonal zueinander in einer Ebene angeordnete Stauchdruckrollen eingesetzt sind.

Gegebenenfalls kann den Stauchdruckrollen noch ein vertikales Seitenrollenpaar nachgeordnet sein, um ein Aufspringen der noch warmen Schweißnaht zu vermeiden.

Nach dem Schweißen wird die Schweißnaht zweckmäßigerweise mittels einer Entgratungsvorrichtung außen, gegebenenfalls jedoch auch im Inneren des Rohrstrangs, geglättet.

Anschließend wird der Rohrstrang durch mehrere Kalibrierwalzenpaare kalibriert.

Die Erfindung ist im folgenden anhand von Zeichnungen und eines Ausführungsbeispiels näher erläutert. Es zeigen

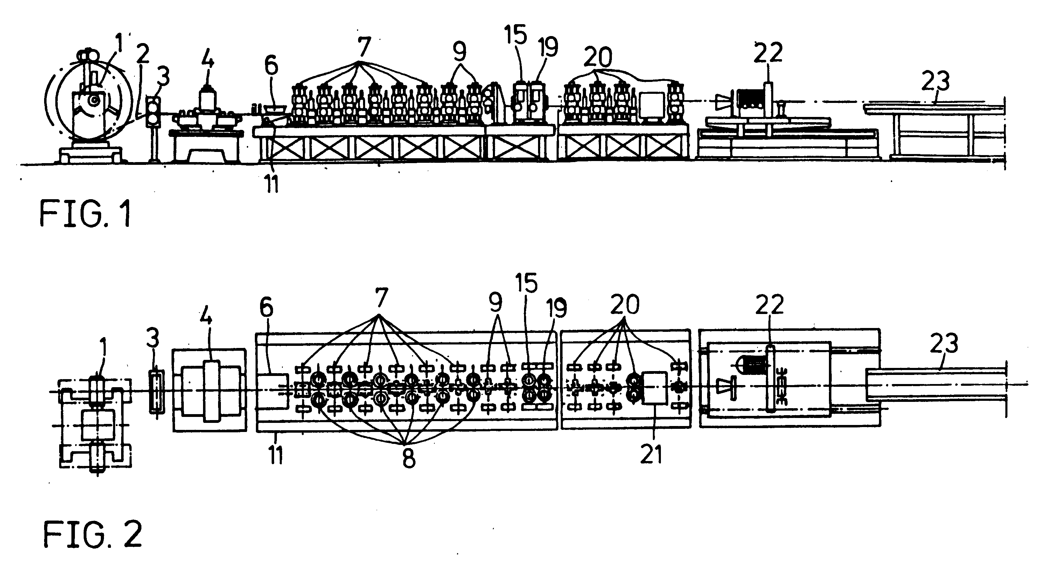

Fig. 1 eine schematische Seitenansicht einer automatisierten Fertigungsvorrichtung,

Fig. 2 eine schematische Draufsicht auf die automatisierte Fertigungsvorrichtung,

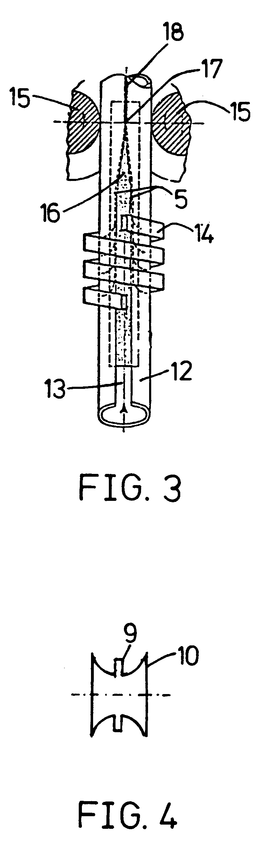

Fig. 3 eine Draufsicht auf den Erwärmungs-Stauch-Schweiß-Bereich,

Fig. 4 eine Vorderansicht der Oberrolle des horizontalen Führungsrollenpaars für die Parallelstellung der Längsränder des gerundeten Profils.

Ein auf einen Doppelhaspel (1) aufgewickeltes 0,65 mm dickes und 297 mm breites Endlosband (2) aus einer Zink-Kupfer-Titan-Legierung läuft über die Laufrollen (3) in die Schweißeinrichtung (4) ein, in der das Ende des in der Walzprofilierstrecke (11) befindlichen Bandes (2) mit dem Anfang des nächstfolgenden Bandes verschweißt wird. Im nächsten Schritt werden die Längsränder (5) des Bandes (2) mittels auf dem Einlauftisch (6) angeordnete im einzelnen nicht dargestellte Hobelstähle zerspanend so bearbeitet, daß die Stirnflächen der Längsränder (5) parallel zueinander verlaufen, um die für ihre Schweißung notwendigen planen Flächen einzustellen. Das Band (2) wird dann in die aus sechs horizontalen Biegewalzenpaaren (7), denen jeweils ein vertikales Seitenrollenpaar (8) nachgeordnet ist, und zwei anschließenden horizontalen Führungsrollenpaaren (9), bei denen im Rollengrund der Oberrolle jeweils ein Zylinderring (10) angebracht ist, bestehende Walzprofilierstrecke eingeführt, in der das Band (2) zu einem gerundeten Profil (12) mit einem nach oben offenen, beidseitig der Symmetrieebene verlaufenden Längsschlitz (13) geformt wird. Die Seitenrollenpaare (8) verhindern ein Auffedern des Profils (12). Dann werden die Längsränder (5) des gerundeten Profils (12) im Bereich der Führungsrollenpaare (9) parallel einander gegenübergestellt, indem die Zylinderringe (10) der beiden Oberrollen in den Längsschlitz (13) des gerundeten Profils (12) eintauchen. Daran anschließend wird das Profil (12) durch den Spuleninduktor (14) geführt und dabei ein etwa 1 mm breiter und etwa 1,5 mm langer Abschnitt der Längsränder (5) auf eine Temperatur von 410°C erwärmt. Dann läuft das Profil (12) durch ein vertikales Stauchrollenpaar (15), wobei die Längsränder (5) unter Bildung eines V-förmigen Schlitzes (16) unter einem Winkel von 6° im Schweißpunkt (17) zusammengeführt, parallel gegenübergestellt und durch Stauchen verschweißt werden. Um ein Aufspringen der noch warmen Schweißnaht (18) zu vermeiden, ist unmittelbar nach dem vertikalen Stauchrollenpaar (15) ein vertikales Seitenrollenpaar (19) angebracht. Anschließend wird der geschweiße Rohrstrang mittels drei horizontaler, einem senkrechten und einem weiteren horizontalen Kalibrierwalzenpaar (20) kalibriert, wobei zwischen dem letzten horizontalen Walzenpaar (20) und dem vorhergehenden vertikalen Walzenpaar eine Prüfeinrichtung (21) für die Schweißnaht angeordnet ist. Die mit einer der Kalibriereinrichtung nachgeordneten Trennvorrichtung (22), die beispielsweise aus einer fliegenden Säge bestehen kann, von dem Rohrstrang (18) in gewünschter Länge automatisch abgelängten Rohrabschnitte werden auf die Auslaufrinne abgelegt.

Die mit der Erfindung erzielten Vorteile bestehen insbesondere darin, daß aus einem aus Zink oder Zinkknetlegierungen bestehenden Band längsnahtgeschweißte Rohre automatisch und kontinuierlich mit großer Geschwindigkeit von bis zu 200 m/min hergestellt werden können, wobei die Festigkeit der Schweißnaht die gleichen Werte wie die des Bandwerkstoffs bei sehr guter Dehnung und Aufweitung bis 30 % besitzt, so daß also auch die Enden der Rohrabschnitte problemlos im Hinblick auf ihre Steckbarkeit aufgeweitet werden können.

**Patentansprüche**

1. Verfahren zur Herstellung von vergleichsweise dünnwandigen Rohren mit durch Widerstandsschweißen hergestellter Längsnaht, insbesondere von Regenfallrohren, mit einem Durchmesser von 50 bis 200 mm und einer Wanddicke von 0,50 bis 1,50 mm aus einem Band, vorzugsweise einem Endlosband, aus Zink oder Zinkknetlegierungen, vorzugsweise aus Zink-Kupfer-Titan-Legierungen, zu einem gerundeten, mit einem beidseitig der Symmetrieebene verlaufenden Längsschlitz versehenen Profil, wobei die den Längsschlitz begrenzenden Längsränder in einer vergleichsweise kurzen Zone auf Schweißtemperatur erwärmt, unter Bildung eines V-förmigen Spaltes im Schweißpunkt zusammengeführt und durch Stauchen stumpf miteinander verschweißt werden, wobei die vor dem Walzprofilieren zur Herstellung ihrer Parallelität zerspanten Längsränder des Bandes unter Bildung des Längsschlitzes parallel gegenübergestellt und in einer Zone von 0,2 bis 1,5 mm Breite sowie 0,5 bis 2,5 mm Länge auf eine unterhalb der Schmelztemperatur liegende Schweißtemperatur erwärmt und im plastischen Zustand miteinander verschweißt werden.

2. Verfahren nach Anspruch 1, dadurch gekennzeichnet, daß die Stirnflächen der Längsränder des Bandes parallel zueinander verlaufend zerspant werden.

3. Verfahren nach Anspruch 1, dadurch gekennzeichnet, daß die Stirnflächen der Längsränder des Bandes mit einem Winkel von größer 0 bis 10° zerspant werden.

4. Verfahren nach den Ansprüchen 1 bis 3, dadurch gekennzeichnet, daß die Längsränder des gerundeten Profils in der vergleichsweise kurzen Zone auf wenigstens 350°C erwärmt werden.

5. Verfahren nach den Ansprüchen 1 bis 4, dadurch gekennzeichnet, daß die Längsränder des gerundeten Profils unter Bildung eines V-förmigen Längsspaltes mit einem Winkel von 3 bis 10°, vorzugsweise 5 bis 7°, im Schweißpunkt zusammengeführt werden.

6. Verfahren nach den Ansprüchen 1 bis 5, dadurch gekennzeichnet, daß der Stauchweg im Schweißpunkt das 0,5- bis 3-fache der Dicke des Bandes beträgt.

7. Verfahren nach den Ansprüchen 1 bis 6, gekennzeichnet durch die Anwendung des Hochfrequenz-Induktions-Preßschweißens.

8. Verfahren nach Anspruch 7, dadurch gekennzeichnet, daß die Hochfrequenzleistung in der Erwärmungszone 5 bis 150 KVA, vorzugsweise 5 bis 100 KVA, beträgt.

**Claims**

1. Process for producing comparatively thinwalled pipes having a longitudinal seam produced by resistance welding, in particular rainwater downpipes, having a diameter of 50 to 200 mm and a wall thickness of 0.50 to 1.50 mm from a strip, preferably an endless strip, of zinc or wrought zinc alloys, preferably of zinc-copper-titanium alloys, to form a rounded profile provided with a longitudinal slit extending on either side of the plane of symmetry, in which the long edges bordering on the longitudinal slit are heated to welding temperature in a comparatively short zone, are brought together to form a V-shaped gap at the weld point and are butt-welded together by upsetting, in which the long edges of the strip which are machined before roll-shaping to produce the parallelism thereof are placed parallel opposite one another, forming the longitudinal slit, and are heated to a welding temperature which is below melting temperature in a zone 0.2 to 1.5 mm wide and 0.5 to 2.5 mm long and are welded together in the plastic state.

2. Process according to Claim 1, characterised in that the end faces of the long edges of the strip are machined running parallel to one another.

3. Process according to Claim 1, characterised in that the end faces of the long edges of the strip are machined at an angle of more than 0 to 10°.

4. Process according to Claims 1 to 3, characterised in that the long edges of the rounded profile are heated to at least 350°C in the comparatively short zone.

5. Process according to Claims 1 to 4, characterised in that the long edges of the rounded profile are brought together at an angle of 3 to 10°, preferably 5 to 7°, at the weld point, forming a V-shaped longitudinal gap.

6. Process according to Claims 1 to 5, characterised in that the compression path at the weld point is 0.5 to 3 times the thickness of the strip.

7. Process according to Claims 1 to 6, characterised by the use of high-frequency induction pressure welding.

8. Process according to Claim 7, characterised in that the high-frequency power in the heating zone is 5 to 150 KVA, preferably 5 to 100 KVA.

**Revendications**

1. Procédé de fabrication de tubes à paroi relativement mince et à soudure longitudinale obtenue par soudure par résistance, notamment de tuyaux de descente des eaux pluviales d'un diamètre de 50 à 200 mm et d'une épaisseur de paroi de 0,50 à 1,5 mm, par transformation d'un feuillard, de préférence d'un feuillard sans fin, en zinc ou en alliages de zinc forgeables, de préférence en alliages de zinc, de cuivre et de titane en un profilé arrondi et muni d'une fente longitudinale s'étendant de part et d'autre du plan de symétrie qui consiste à porter les bords longitudinaux délimitant la fente longitudinale à la température de soudage dans une zone relativement courte, à les faire se rencontrer au point de soudage avec formation d'une fente en forme de V, et à les souder bout à bout l'un à l'autre par refoulement, les bords longitudinaux du feuillard, usiné avant le profilage par laminage en vue d'obtenir leur parallélisme, étant mis en regard parallèlement avec formation de la fente longitudinale et étant portés dans une zone de 0,2 à 1,5 mm de largeur ainsi que 0,5 à 2,5 mm de longueur, à une température inférieure au point de fusion et étant soudés l'un à l'autre à l'état plastique.

2. Procédé selon la revendication 1, caractérisé en ce qu'il consiste à usiner les surfaces frontales des bords longitudinaux du feuillard s'étendant parallèlement l'une à l'autre.

3. Procédé selon la revendication 1, caractérisé en ce qu'il consiste à usiner les surfaces frontales des bords longitudinaux du feuillard sous un angle compris entre une valeur supérieure à 0° et 10°.

4. Procédé suivant l'une des revendications 1 à 3, caractérisé en ce qu'il consiste à porter les bords longitudinaux du profilé arrondi dans la zone relativement courte à au moins 350°C.

5. Procédé suivant l'une des revendications 1 à 4, caractérisé en ce qu'il consiste à faire se rencontrer au point de soudure les bords longitudinaux du profilé arrondi, avec formation d'une fente longitudinale en forme de V, sous un angle de 3 à 10° et de préférence de 5 à 7°.

6. Procédé suivant l'une des revendications 1 à 5, caractérisé en ce que le chemin de refoulement au point de soudure représente de 0,5 à trois fois l'épaisseur du feuillard.

7. Procédé suivant l'une des revendications 1 à 6, caractérisé par l'utilisation d'un soudage par pression à induction et à haute fréquence.

8. Procédé suivant la revendication 7, caractérisé en ce que la puissance de la haute fréquence dans la zone de chauffage est de 5 à 150 KVA et de préférence de 5 à 100 KVA.

FIG.1

FIG.2

FIG. 3

FIG. 4